# EUROPÄISCHE PATENTSCHRIFT

(11) **EP 2 032 870 B1**
(45) Veröffentlichungstag und Bekanntmachung des Hinweises auf die Patenterteilung: **18.01.2012**
(21) Anmeldenummer: 07728338.0
(22) Anmeldetag: 20.04.2007
(51) Int. Cl.: F16F 9/05

(54) **LUFTFEDER MIT TELESKOP-FALTENBALG**
AIR SPRING WITH TELESCOPIC BELLOWS
RESSORT PNEUMATIQUE AVEC SOUFFLET TÉLESCOPIQUE

(30) Priorität: 12.06.2006 DE 102006027476
(43) Veröffentlichungstag der Anmeldung: 11.03.2009
(73) Patentinhaber: Continental Teves AG & Co. OHG, 60488 Frankfurt (DE)
(72) Erfinder: GLEU, Jens-Uwe, 30855 Langenhagen (DE); JOB, Heinz, 31535 Neustadt (DE)
(86) Internationale Anmeldenummer: PCT/EP2007/053879
(87) Internationale Veröffentlichungsnummer: WO 2007/144223

(56) Entgegenhaltungen:
- EP-A1- 0 198 734
- DE-A1- 10 302 495
- SU-A1- 922 352

## Beschreibung

Die Erfindung betrifft gemäß dem Oberbegriff des Anspruchs 1 eine Luftfederanordnung für ein Fahrzeug, welche einen Luftfederbalg aus elastomerem Werkstoff mit zwei Balgenden, der unter Bildung einer Rollfalte eine volumenelastische Luftkammer umschließt, einen Deckel mit einem ersten Anschlussbereich für das eine Balgende, eine Außenhülse, einen Abrollkolben mit einem zweiten Anschlussbereich für das andere Balgende, wobei der Abrollkolben eine Abrollfläche für die Rollfalte des Luftfederbalges aufweist, ein Anschlusselement, welches mit dem Abrollkolben verbunden ist, und einen Faltenbalg, welcher einerseits mit der Außenhülse und andererseits mit dem Anschlusselement oder dem Abrollkolben verbunden ist, enthält.

Eine Luftfederanordnung der eingangs genannten Art ist aus der DE10302495A1 bekannt. Eine derartige Luftfederanordnung wird zwischen dem Fahrzeugaufbau bzw. der Fahrzeugkarosserie und einem Radträger montiert. Die bekannte Luftfederanordnung baut sehr lang. Insbesondere die Schutzmanschette, welche auch als Faltenbalg bezeichnet wird und eine Luftfederschlaufe vor eindringender Feuchtigkeit und Verschmutzung schützen soll, weist eine große Baulänge auf. Aus diesem Grund sind derartige Luftfederanordnungen mit entsprechend lang bauenden Faltenbälgen für bestimmte Bauraumanforderungen in Fahrzeugen nicht geeignet.

Die EP 198 734 A1 offenbart eine Schutzmanschette für eine Stossdämpferstange, die aus zwei Faltenbälgen unterschiedlichen Durchmessers besteht, die miteinander über einen Kragen verbunden sind und teilweise ineinander aufgenommen sind.

Aufgabe der Erfindung ist es, einen Faltenbalg für eine Luftfederanordnung für ein Fahrzeug zu schaffen, welcher einen geringen Bauraum beansprucht, die Luftfederanordnung sicher vor Schmutz und Feuchtigkeit schützt und gleichzeitig das Federungs- und Dämpfungsverhalten der Luftfederanordnung nicht negativ beeinflusst.

Die Aufgabe wird erfindungsgemäß durch die Merkmale des Anspruchs 1 gelöst. Der Faltenbalg ist aus einem inneren und einem äußeren Teil-Faltenbalg zusammengesetzt, wobei der äußere Teil -Faltenbalg den inneren Teil-Faltenbalg zumindest teilweise umschließt.

Der Vorteil der Erfindung ist darin zu sehen, dass eine Luftfederanordnung mit einem erfindungsgemäßen Faltenbalg sehr kurz und kompakt baut und dabei die Federungs- und Dämpfungseigenschaften der Luftfederanordnung nicht negativ beeinflusst. Ein weiterer Vorteil ist, dass die spezifische Biegebelastung der einzelnen Falten des Faltenbalges durch die Aufteilung in einen inneren und einen äußeren Teil-Faltenbalg sehr gering gehalten werden kann, ohne die von der Luftfederanordnung zurückzulegenden Ein- und Ausfederwege einzuschränken. Damit ist quasi eine doppelte Anzahl von Falten des Faltenbalges in dem gleichen Bauraum möglich, was mehr Bewegungsfreiheit und mehr Ein- und Ausfederweg der Luftfederanordnung zu Folge hat. Auch die Belastung der Falten des Faltenbalges erfolgt gleichmäßiger und ist insgesamt geringer.

Gemäß der Erfindung ist vorgesehen, dass bei der Einfederung der Luftfederanordnung der äußere Teil-Faltenbalg zusammengedrückt und der innere Teil-Faltenbalg auseinander gezogen wird. Der Vorteil dieser Weiterbildung ist, dass für kleinere bis normale Einfederwege der Luftfederanordnung alle, sowohl die inneren als auch die äußeren, Falten des Faltenbalges deformiert werden und dadurch die spezifische Biegebelastung der einzelnen Falten gering gehalten wird. Damit ist eine doppelte Anzahl von Falten des Faltenbalges in dem gleichen Bauraum möglich, was mehr Bewegungsfreiheit und mehr Ein- und Ausfederweg der Luftfederanordnung zu Folge hat. Auch die Belastung der Falten des Faltenbalges erfolgt gleichmäßiger und ist insgesamt geringer.

Gemäß der Erfindung ist vorgesehen, dass bei der Ausfederung der Luftfederanordnung der äußere Teil-Faltenbalg auseinander gezogen und der innere Teil-Faltenbalg zusammengedrückt wird. Der Vorteil dieser Weiterbildung ist, dass für kleinere bis normale Einfederwege der Luftfederanordnung alle, sowohl die inneren als auch die äußeren, Falten des Faltenbalges deformiert werden und dadurch die spezifische Biegebelastung der einzelnen Falten gering gehalten wird. Damit ist eine doppelte Anzahl von Falten des Faltenbalges in dem gleichen Bauraum möglich, was mehr Bewegungsfreiheit und mehr Ein- und Ausfederweg der Luftfederanordnung zu Folge hat. Auch die Belastung der Falten des Faltenbalges erfolgt gleichmäßiger und ist insgesamt geringer.

Gemäß einer Weiterbildung der Erfindung nach Anspruch 2 ist vorgesehen, dass bei größeren Ein- oder Ausfederbewegungen der Luftfederanordnung zumindest ein Teil der Faltenabschnitte des inneren und/oder des äußeren Teil-Faltenbalges auf Block beansprucht werden. Jede Falte des Faltenbalges bzw. des inneren und äußeren Teil-Faltenbalges besteht aus zwei Faltenschenkeln, welche bei großen Ein- oder Ausfederwegen der Luftfederanordnung eng aneinander liegen und damit "auf Block" bzw. auf Anschlag beansprucht werden, als wenn diese Faltenschenkel zusammengepresst werden würden. Der Vorteil dieser Weiterbildung ist darin zu sehen, dass bei großen Federwegen der Luftfederanordnung ein Teil-Faltenbalg "auf Block" beansprucht wird und der andere Teil-Faltenbalg den weiteren Federweg allein mitgeht. Dies hat eine Art Notreserve des Faltenbalges für die selten vorkommenden großen Federwege der Luftfederanordnung, wie z.B. die Beanspruchung in den Endanschlägen, zur Folge.

Gemäß einer Weiterbildung der Erfindung nach Anspruch 3 ist vorgesehen, dass die Faltenabschnitte des inneren und des äußeren Teil-Faltenbalges eine nahezu identische geometrische Gestaltung aufweisen. Der Vorteil dieser Weiterbildung ist darin zu sehen, dass ein gleichmäßiges Bewegungs- und Federungsverhalten des inneren und des äußeren Teil-Faltenbalges gewährleistet ist.

Gemäß einer Weiterbildung der Erfindung nach Anspruch 4 ist vorgesehen, dass die Faltenabschnitte des inneren Teil-Faltenbalges gegenüber den Faltenabschnitten des äußeren Teil-Faltenbalges eine andere geometrische Gestaltung aufweisen. Der Vorteil ist darin zu sehen, dass der innere gegenüber dem äußeren Teil-Faltenbalg an ein ggf. vorhandenes oder eiwünschtes unterschiedliches Ein- bzw. Ausfederverhalten des Faltenbalges und/oder der Luftfederanordnung angepasst werden kann, womit dieses ungleichmäßige Federverhalten nachgebildet oder entgegengewirkt werden kann.

Gemäß einer Weiterbildung der Erfindung nach Anspruch 5 ist vorgesehen, dass die Anzahl der Faltenabschnitte des inneren oder des äußeren Teil-Faltenbalges größer ist als die Anzahl der Faltenabschnitte des äußeren bzw. des inneren Teil-Faltenbalges. Ein wesentlicher Einflussparameter auf das Ein- und Ausfederverhalten des Faltenbalges ist die Anzahl der Falten bzw. Faltenschenkel des inneren gegenüber dem äußeren Teil-Faltenbalg. Der Vorteil dieser Weiterbildung der Erfindung liegt in der Anpassung des Faltenbalges an unterschiedliche Ein- und Ausfederwege und Bedingungen der Luftfederanordnung, z.B. unterschiedlicher Weglängen bis in den jeweiligen Endanschlag.

Weitere wichtige Einflussparameter für die Deformation der Falten durch die Biegung der Faltenschenkel sind das Material des Teil-Faltenbalges selbst, die Materialstärke des Teil-Faltenbalges, der Biegeradius der Falten bzw. Faltenschenkel im spannungslosen Zustand, die Länge der Faltenschenkel und der Winkel der Faltenschenkel zu einander im spannungslosen Zustand. Als Material für einen Teil-Faltenbalg kommen grundsätzlich alle biegsamen Kunststoffe und Metalle, sowie elastomere Werkstoffe in Frage. Vorzugsweise können thermoplastische Elastomere (TPE), Thermoplast oder Mischungen aus Naturkautschuk (NR) oder Synthesekautschuk, z.B. Nitrilkautschuk (NBR), Acrylnitril-Butadien-Copolymerisate (HNBR), Ethylen-Propylen-Dienkautschuk (EPDM) oder Silikonkautschuk, als Material für eine Teil-Faltenbalg verwendet werden. Mit diesen Parametern lässt sich die Auslegung des inneren und äußeren Teil-Faltenbalges hinsichtlich der Bauraumanforderungen und der erforderlicher Kräfte und Belastungen leicht und sehr spezifisch an die Erfordernisse der Luftfederanordnung im Fahrzeug anpassen.

Gemäß einer Weiterbildung der Erfindung nach Anspruch 6 ist vorgesehen, dass zumindest das erste Ende des äußeren Teil-Faltenbalges mittels eines ersten Befestigungselementes an dem Deckel und/oder der Außenhülse der Luftfederanordnung befestigbar ist. Der Vorteil dieser Weiterbildung besteht darin, dass nur ein Ende des äußeren Teil-Faltenbalges an der Luftfederanordnung befestigt werden braucht, was mit bekannten Verbindungsmitteln wie z.B. Klemmringen oder Clipsen oder einer Presspassung möglich ist.

Gemäß einer Weiterbildung der Erfindung nach Anspruch 7 ist vorgesehen, dass zumindest das erste Ende des inneren Teil-Faltenbalges mittels eines zweiten Befestigungselementes an dem Abrollkolben und/oder dem Anschlusselement der Luftfederanordnung befestigbar ist. Der Vorteil dieser Weiterbildung besteht darin, dass nur ein Ende des inneren Teil-Faltenbalges an der Luftfederanordnung befestigt werden braucht, was mit bekannten Verbindungsmitteln wie z.B. Klemmringen oder Clipsen oder einer Presspassung möglich ist.

Gemäß einer Weiterbildung der Erfindung nach Anspruch 8 ist vorgesehen, dass das zweite Ende des inneren Teil-Faltenbalges mit dem zweiten Ende des äußeren Teil-Faltenbalges verbindbar ist. Der Vorteil dieser Weiterbildung ist darin zu sehen, dass der innere und äußere Teil-Faltenbalg mittels herkömmlicher Fertigungstechnologie hergestellt werden können, welche einfach und kostengünstig ist und danach miteinander verbunden werden können. Ein weiterer Vorteil ist, dass der Faltenbalg aus zwei unterschiedlichen Materialien herstellbar ist, wobei der innere Teil-Faltenbalg aus einem ersten Werkstoff und der äußere Teil-Faltenbalg aus einem zweiten Werkstoff besteht.

Gemäß einer Weiterbildung der Erfindung nach Anspruch 9 ist vorgesehen, dass der innere Teil-Faltenbalg und der äußere Teil-Faltenbalg einteilig in Form eines Faltenbalges ausgeführt sind. Der Vorteil besteht darin, dass keine Verbindungsstelle und damit ggf. Schwachstelle zwischen dem inneren und dem äußeren Teil-Faltenbalg besteht. Der Aufbau des Faltenbalges wird dadurch insgesamt viel homogener.

Gemäß einer Weiterbildung der Erfindung nach Anspruch 10 ist vorgesehen, dass der innere und der äußere Teil-Faltenbalg mittels eines mechanischen Verbindungsmittels verbindbar sind. Der Vorteil dieser Weiterbildung der Erfindung ist darin zu sehen, dass die Verbindung des inneren Teil-Faltenbalges mit dem äußeren Teil-Faltenbalg mittels einfacher mechanischer Verbindungsmittel, wie z.B. Schrauben, Nieten oder einer Einknüpfung bzw. Verzahnungstechnik, möglich ist.

Gemäß einer Weiterbildung der Erfindung nach Anspruch 11 ist vorgesehen, dass der innere und der äußere Teil-Faltenbalg mittels schweißen, kleben oder vulkanisieren miteinander verbindbar sind. Der Vorteil dieser Weiterbildung der Erfindung ist darin zu sehen, dass die Verbindung des inneren Teil-Faltenbalges mit dem äußeren Teil-Faltenbalg mittels einfacher, bekannter Verbindungsverfahren möglich ist. Ein besonderer Vorteil dieser Verbindungstechniken ist, dass die Verbindungsstelle zwischen dem inneren und dem äußeren Teil-Faltenbalg luft- und wasserdicht erfolgen kann.

Ausführungsbeispiele und weitere Vorteile der Erfindung werden im Zusammenhang mit den nachstehenden Figuren erläutert, darin zeigen:
- Fit. 1: Eine Luftfederanordnung,
- Fig.2: Faltenbalg an einer Luftfederanordnung im spannungslosen Zustand,
- Fig.2a: Faltenbalg an einer Luftfederanordnung im voll eingefederten Zustand,
- Fig.2b: Faltenbalg an einer Luftfederanordnung im voll aus gefederten Zustand,
- Fig.3: Faltenbalg an einer Luftfederanordnung,
- Fig.3a: Faltenbalg an einer Luftfederanordnung,
- Fig.4: Faltenbalg an einer Luftfederanordnung.

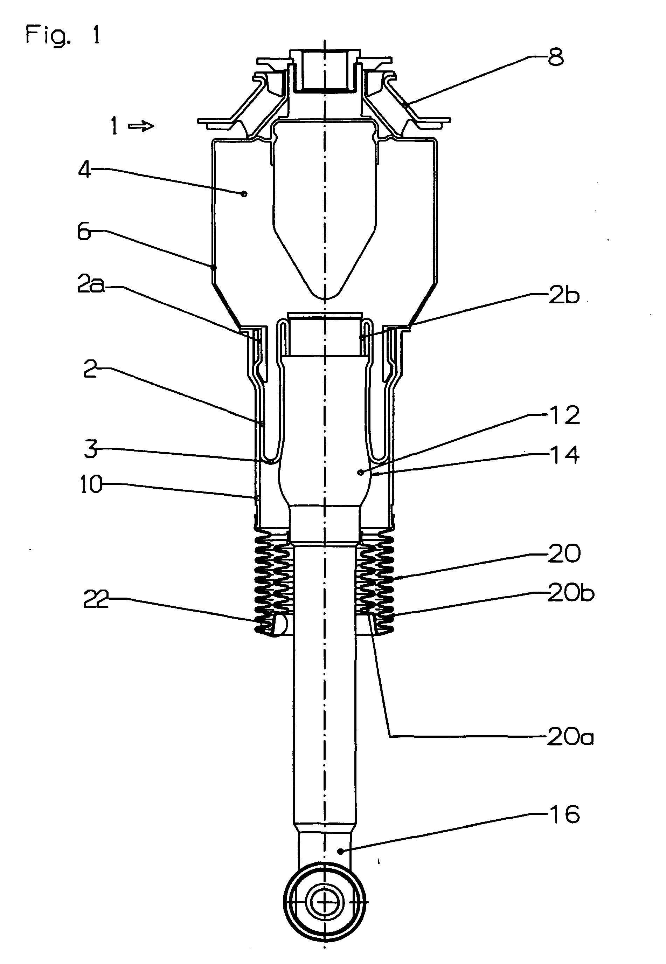

Fig. 1 zeigt eine Luftfederanordnung 1 für ein Fahrzeug mit einem Luftfederbalg 2 aus elastomerem Werkstoff mit zwei Balgenden , der unter Bildung einer Rollfalte 3 eine volumenelastische Luftkammer 4 umschließt, einem Deckel 6 mit einem ersten Anschlussbereich für das eine Balgende 2a eine Außenhülse 10, einem Abrollkolben 12 mit einem zweiten Anschlussbereich für das andere Balgende 2b, wobei der Abrollkolben 12 eine Abrollfläche 14 für die Rollfalte 3 des Luftfederbalges 2 aufweist, einem Anschlusselement 16, welches mit dem Abrollkolben 12 verbunden ist, und einen Faltenbalg 20, welcher einerseits mit der Außenhülse 10 und andererseits mit dem Anschlusselement 16 oder dem Abrollkolben 12 verbunden ist. Das Anschlusselement 16 kann mit einem nicht dargestellten Radträger oder dgl. verbunden werden. Der Deckel 6 kann mittels eines Lagerelementes 8 beispielsweise an der Fahrzeugkarosserie befestigt werden.

Die Verbindung des Faltenbalges 20 mit der Außenhülse 10 oder dem Abrollkolben 12 bzw. dem Anschlusselement 16 kann mittels herkömmlicher Klemmringe, Kabelbinder, einer Press- oder Klemmverbindung, einer Klebung oder dergleichen hergestellt werden. Zwischen dem Anschlusselement 16 und dem Abrollkolben 12 kann auch ein Stoßdämpfer-Zylinderrohr oder dgl. angeordnet werden, wobei eine entsprechende feste Verbindung zwischen den Bauteilen besteht. Der Faltenbalg 20 ist aus einem inneren 20a und einem äußeren 20b Teil-Faltenbalg zusammengesetzt. Der Verbindungsbereich 22 des äußeren 22b mit dem inneren 22a Teil-Faltenbalg ist in diesem Fall durchgehend einteilig ausgeführt. Der äußere Teil -Faltenbalg 20b umschließt den inneren Teil-Faltenbalg 20a zumindest teilweise, so dass die Baulänge des Faltenbalges 20 insgesamt reduziert wird.

Die Verwendung des erfindungsgemäßen Faltenbalges 20 bestehend aus einem inneren Teil-Faltenbalg 20a und einem äußeren Teilfaltenbalg 20b ist nicht auf das Ausführungsbeispiel der Figur 1 beschränkt, sondern kann vielmehr zumindest in allen anderen Luftfedermodulen, z.B. einer Luftfeder mit integriertem Stoßdämpfer, einer Luftfeder-Luftdämpfereinheit oder Kombinationsmodulen aus mehreren Luftfedern mit dazwischen angeordneten Drosseln oder hydropneumatischen Federbeinen, mit Außenhülse 10 oder Vergleichbarem erfolgen.

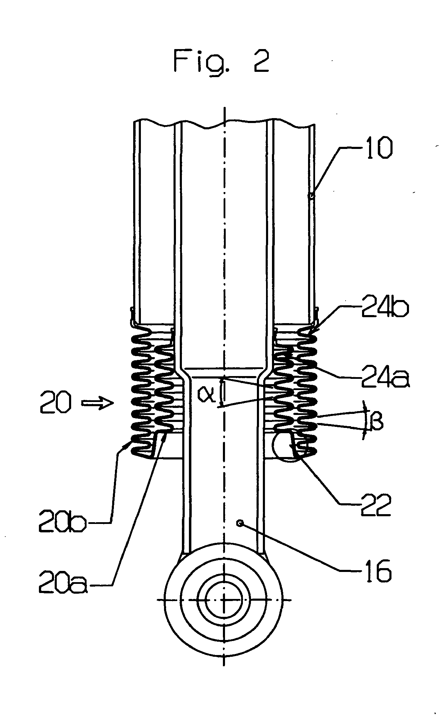

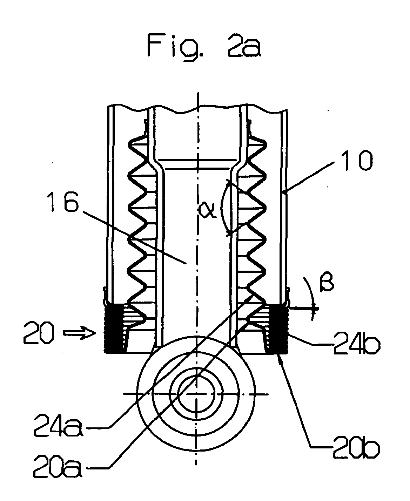

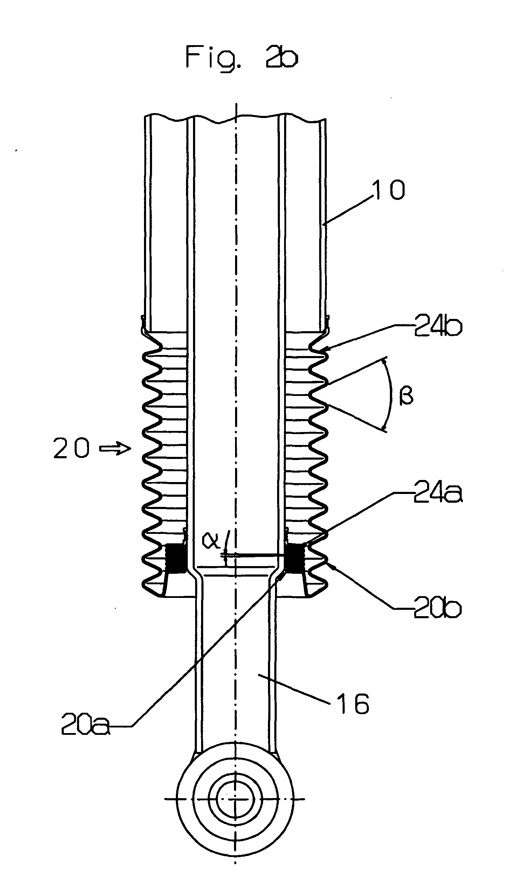

Die Fig.2 zeigt einen Ausschnitt einer Luftfederanordnung mit einem Anschlusselement 16, einem daran befestigten inneren Teil-Faltenbalg 20a und einem äußeren Teil-Faltenbalg 20b, welcher an einer Außenhülse 10 befestigt ist. Die inneren und äußeren Teil-Faltenbälge 20a, 20b sind im Verbindungsbereich 22 einteilig zu einem Faltenbalg 20 zusammengefügt bzw. als ein Bauteil (Faltenbalg 20) hergestellt worden. Die einzelnen Faltenabschnitte 24a des inneren Teil-Faltenbalges 20a weisen die gleiche geometrische Gestaltung und Dimension (Länge, Höhe, Breite) auf, wie die Faltenabschnitte 24b des äußeren Teil-Faltenbalges 20b. Auch der Öffnungswinkel α der einzelnen Faltenabschnitte 24a des inneren Teil-Faltenbalges 20a zueinander ist in unbelastetem Zustand des Faltenbalges 20 in etwa gleich groß, wie der Öffnungswinkel β der einzelnen Faltenabschnitte 24b des äußeren Teil-Faltenbalges 24b zueinander. Idealerweise liegen die Öffnungswinkel α und β in unbelastetem Zustand des Faltenbalges 20 in einem Winkelbereich von 5° bis 45°. Die Anzahl der Faltenabschnitte 24a ist mit 13 Stück geringer als die Anzahl der Faltenabschnitte 24b in Höhe von 21 Stück.

Die Fig.2a zeigt denselben Ausschnitt einer Luftfederanordnung der Fig.2 in vollständig eingefedertem Zustand, wobei die Faltenabschnitte 24a des inneren Teil-Faltenbalges 20a weiter auseinander gezogen worden sind und sich somit deren Öffnungswinkel α gegenüber dem unbelasteten Zustand vergrößert hat. Dagegen hat sich der Öffnungswinkel β der Faltenabschnitte 24b des äußeren Teil-Faltenbalges 20b stark verringert. Der Öffnungswinkel β liegt im Winkelbereich von 0°, wenn die Faltenabschnitte 24b, wie in Fig. 2a gezeigt, auf Block beansprucht werden.

Die Fig.2b zeigt denselben Ausschnitt einer Luftfederanordnung der Fig.2 in vollständig ausgefedertem Zustand, wobei die Faltenabschnitte 24b des äußeren Teil-Faltenbalges 20b weiter auseinander gezogen worden sind und sich somit deren Öffnungswinkel β gegenüber dem unbelasteten Zustand vergrößert hat. Dagegen hat sich der Öffnungswinkel α der Faltenabschnitte 24a des inneren Teil-Faltenbalges 20a stark verringert. Der Öffnungswinkel α liegt im Winkelbereich von 0°, wenn die Faltenabschnitte 24a, wie in Fig. 2b gezeigt, auf Block beansprucht werden.

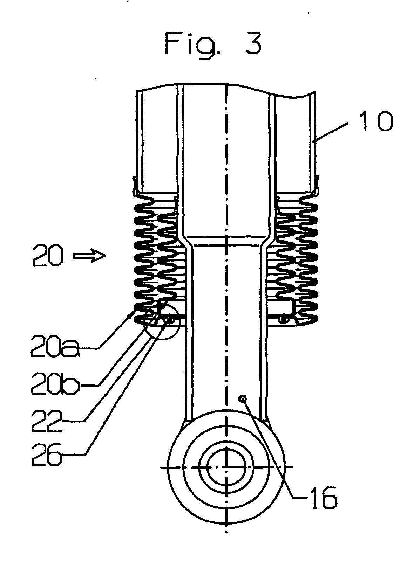

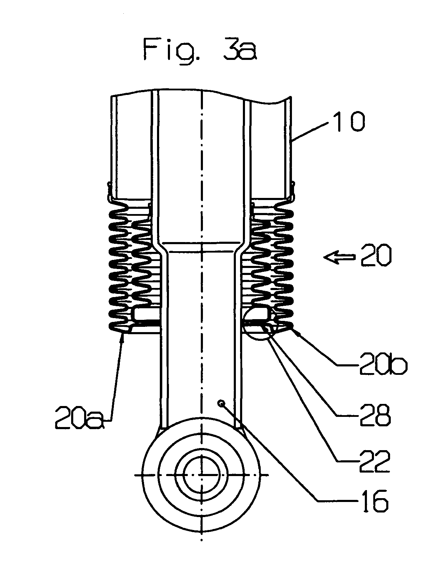

Die Fig.3 zeigt einen Ausschnitt einer Luftfederanordnung mit einem Anschlusselement 16, einem daran befestigten inneren Teil-Faltenbalg 20a und einem äußeren Teil-Faltenbalg 20b, welcher an einer Außenhülse 10 befestigt ist. Die inneren und äußeren Teil-Faltenbälge 20a, 20b sind im Verbindungsbereich 22 mittels eines mechanischen Verbindungsmittels 26 zu einem Faltenbalg 20 zusammengefügt worden, wobei der innere Teilfaltenbalg 20a einen Kragen mit mindestens einer hervorstehende Nase aufweist. Diese Nase kann mittels einer Schnappverbindung in eine Öffnung eines Kragens des äußeren Teilfaltenbalges 20b hinfassen und diese fest miteinander verbinden. Es sind aber auch alle andere bekannten mechanischen Verbindungsmittel 26 einsetzbar, um den inneren Teil-Faltenbalg 20a mit dem äußeren Teilfaltenbalg 20b fest und gegebenenfalls lösbar miteinander zu verbinden, so z.B. Schraub- oder Nietverbindungen, Klemmverbindungen oder dgl..
Die Fig.3a zeigt einen Ausschnitt einer Luftfederanordnung mit einem Anschlusselement 16, einem daran befestigten inneren Teil-Faltenbalg 20a und einem äußeren Teil-Faltenbalg 20b, welcher an einer Außenhülse 10 befestigt ist. Die inneren und äußeren Teil-Faltenbälge 20a, 20b sind im Verbindungsbereich 22 mittels einer Fügenaht 28 zu einem Faltenbalg 20 fest miteinander verbunden. Die Fügenaht 28 kann entweder eine Schweißnaht, eine Klebestoffnaht oder eine Vulkanisations- bzw. Elastomernaht sein, je nachdem ob diese mittels schweißen, kleben oder vulkanisieren hergestellt worden ist.

Der Vorteil der Verbindungstechniken des inneren mit dem äußeren Teilfaltenbalges 20a, 20b nach den Ausführungsbeispielen der Fig.3 und Fig.3a besteht darin, dass die Herstellung der einzelnen Teilfaltenbälge 20a und 20b sehr einfach mit standardisierten Verfahren möglich ist und erst dann ein Verbindung dieser zum Faltenbalg 20 erfolgt. Es besteht mit diesen Verbindungstechniken auch die Möglichkeit unterschiedliche Werkstoffe, wie z.B. elastomere Werkstoffe aus Naturkautschuk (NR) oder Synthesekautschuk, insbesondere Nitrilkautschuk (NBR), Acrylnitril-Butadien-Copolymerisat (HNBR), Ethylen-Propylen-Dienkautschuk (EPDM) oder Silikonkautschuk, oder thermoplastische Elastomere (TPE) oder Thermoplast oder gar metallische Werkstoffe, insbesondere Federstähle, miteinander zu kombinieren. So kann z.B. der innere Teilfaltenbalg 20a aus einem Nitrilkautschuk bestehen und der äußere Teilfaltenbalg 20b aus einem metallischen Federstahl bestehen oder umgekehrt. Die Auswahl des Werkstoffes für den inneren Teilfaltenbalg 20a und den äußeren Teilfaltenbalg 20b ist beliebig und die Werkstoffkombinationsmöglichkeit auch, welche allerdings die Anwendung der entsprechenden Verbindungstechnik beeinflusst.

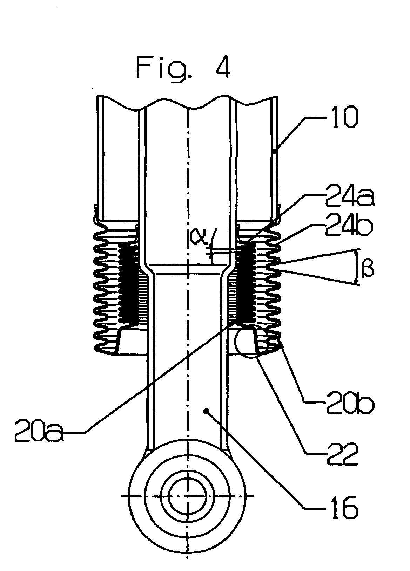

Die Fig.4 zeigt einen Ausschnitt einer Luftfederanordnung mit einem Anschlusselement 16, einem daran befestigten inneren Teil-Faltenbalg 20a und einem äußeren Teil-Faltenbalg 20b, welcher an einer Außenhülse 10 befestigt ist. Die inneren und äußeren Teil-Faltenbälge 20a, 20b sind im Verbindungsbereich 22 einteilig zu einem Faltenbalg 20 zusammengefügt bzw. als ein Bauteil (Faltenbalg 20) hergestellt worden. Die einzelnen Faltenabschnitte 24a des inneren Teil-Faltenbalges 20a weisen die eine andere geometrische Gestaltung und Dimension (Länge, Höhe, Breite) auf, wie die Faltenabschnitte 24b des äußeren Teil-Faltenbalges 20b. In diesem Ausführungsbeispiel sind die Faltenabschnitte 24a größer, d.h. länger, als die Faltenabschnitte 24b. Auch der Öffnungswinkel α der einzelnen Faltenabschnitte 24a des inneren Teil-Faltenbalges 20a zueinander ist in unbelastetem Zustand des Faltenbalges 20 geringer, wie der Öffnungswinkel β der einzelnen Faltenabschnitte 24b des äußeren Teil-Faltenbalges 24b zueinander. Die Anzahl der Faltenabschnitte 24a ist mit 29 Stück höher als die Anzahl der Faltenabschnitte 24b in Höhe von 21 Stück.

Die genannten Werkstoffe und geometrischen Ausführungsvarianten sind nicht auf die in der Ausführungsbeispielen der Fig.1 bis Fig.4 genannten beschränkt, sondern können vielmehr beliebig miteinander kombiniert werden.

### Bezugszeichenliste

### (Teil der Beschreibung)

- 1 -: Luftfederanordnung
- 2 -: Luftfederbalg
- 2a -: erstes Balgende
- 2b -: zweites Balgende
- 3 -: Rollfalte
- 4 -: Luftkammer
- 6 -: Deckel
- 8 -: Lagerelement
- 10 -: außenhülse
- 12 -: Abrollkolben
- 14 -: Abrollfläche
- 16 -: Anschlusselement
- 20 -: Faltenbalg
- 20a -: innerer Teil-Faltenbalg
- 20b -: äußerer Teil-Faltenbalg
- 22 -: Verbindungsbereich
- 24a -: Faltenabschnitt (des inneren Teil-Faltenbalges)
- 24b -: Faltenabschnitt (des äußeren Teil-Faltenbalges)
- 26 -: mechanisches Verbindungsmittel
- 28 -: Fügenaht

- α -: Öffnungswinkel (der Faltenabschnitte des inneren Teil-Faltenbalges)
- β - -: Öffnungswinkel (der Faltenabschnitte des äußeren Teil-Faltenbalges)

## Patentansprüche

1. Luftfederanordnung (1) für ein Fahrzeug, die die folgenden Bestandteile enthält:
einen Luftfederbalg (2) aus elastomerem Werkstoff mit zwei Balgenden (2a, 2b),
der unter Bildung einer Rollfalte (3) eine volumenelastische Luftkammer (4) umschließt,
einen Deckel (6) mit einem ersten Anschlussbereich für das eine Balgende (2a),
eine Außenhülse (10),
einen Abrollkolben (12) mit einem zweiten Anschlussbereich für das andere Balgende (2b), wobei der Abrollkolben (12) eine Abrollfläche (14) für die Rollfalte (3) des Luftfederbalges (2) aufweist,
ein Anschlusselement (16), welches mit dem Abrollkolben (12) verbunden ist, und
einen Faltenbalg (20), welcher einerseits mit der Außenhülse (10) und andererseits mit dem Anschlusselement (16) oder dem Abrollkolben (12) verbunden ist, wobei der Faltenbalg (20) aus einem inneren und einem äußeren Teil-Faltenbalg (20a, 20b) zusammengesetzt ist, wobei der äußere Teil-Faltenbalg (20b) den inneren Teil-Faltenbalg (20a) zumindest teilweise umschließt, **dadurch gekennzeichnet, dass** bei der Einfederung der Luftfederanordnung (1) der äußere Teil-Faltenbalg (20b) zusammengedrückt und der innere Teil-Faltenbalg (20a) auseinander gezogen wird und dass bei der Ausfederung der Luftfederanordnung (1) der äußere Teil-Faltenbalg (20b) auseinander gezogen und der innere Teil-Faltenbalg (20a) zusammengedrückt wird.

2. Luftfederanordnung (1) nach Anspruch 1, **dadurch gekennzeichnet, dass** bei größeren Ein- oder Ausfederbewegungen der Luftfederanordnung (1) zumindest ein Teil der Faltenabschnitte (24a, 24b) des inneren und/oder des äußeren Teil-Faltenbalges (20a, 20b) auf Block beansprucht werden.

3. Luftfederanordnung (1) nach einem der vorherigen Ansprüche, **dadurch gekennzeichnet, dass** die Faltenabschnitte (24a, 24b) des inneren und des äußeren Teil-Faltenbalges (20a, 20b) eine nahezu identische geometrische Gestaltung aufweisen.

4. Luftfederanordnung (1) nach einem der vorherigen Ansprüche, **dadurch gekennzeichnet, dass** die Faltenabschnitte (24a) des inneren Teil-Faltenbalges (20a) gegenüber den Faltenabschnitten (24b) des äußeren Teil-Faltenbalges (20b) eine andere geometrische Gestaltung aufweisen.

5. Luftfederanordnung (1) nach einem der vorherigen Ansprüche, **dadurch gekennzeichnet, dass** die Anzahl der Faltenabschnitte (24a, 24b) des inneren oder des äußeren Teil-Faltenbalges (20a, 20b) größer ist als die Anzahl der Faltenabschnitte (24b, 24a) des äußeren bzw. des inneren Teil-Faltenbalges (20b, 20a).

6. Luftfederanordnung (1) nach einem der vorherigen Ansprüche, **dadurch gekennzeichnet, dass** zumindest das erste Ende des äußeren Teil-Faltenbalges (20b) mittels eines ersten Befestigungselementes an dem Deckel (6) und/oder der Außenhülse (10) der Luftfederanordnung (1) befestigbar ist.

7. Luftfederanordnung (1) nach einem der vorherigen Ansprüche, **dadurch gekennzeichnet, dass** zumindest das erste Ende des inneren Teil-Faltenbalges (20a) mittels eines zweiten Befestigungselementes an dem Abrollkolben (12) und/oder dem Anschlusselement (16) der Luftfederanordnung (1) befestigbar ist.

8. Luftfederanordnung (1) nach einem der vorherigen Ansprüche, **dadurch gekennzeichnet, dass** das zweite Ende des inneren Teil-Faltenbalges (20a) mit dem zweiten Ende des äußeren Teil-Faltenbalges (20b) verbindbar ist.

9. Luftfederanordnung (1) nach einem der vorherigen Ansprüche **dadurch gekennzeichnet, dass** der innere Teil-Faltenbalg (20a) und der äußere Teil-Faltenbalg (20b) einteilig in Form eines Faltenbalges (20) ausgeführt sind.

10. Luftfederanordnung (1) nach Anspruch 8, **dadurch gekennzeichnet, dass** der innere und der äußere Teil-Faltenbalg (20a, 20b) mittels eines mechanischen Verbindungsmittels (26) verbindbar sind.

11. Luftfederanordnung (1) nach Anspruch 8, **dadurch gekennzeichnet, dass** der innere und der äußere Teil-Faltenbalg (20a, 20b) mittels einer Fügenaht (28) durch schweißen, kleben oder vulkanisieren miteinander verbindbar sind.

## Claims

1. Air spring arrangement (1) for a vehicle, comprising the following constituent parts:
an air spring bellows (2) which is composed of elastomer material and which has two bellows ends (2a, 2b) and which, forming a roll fold (3), encloses an air chamber (4) of variable volume,
a cover (6) which has a first connection region for one bellows end (2a),
an external sleeve (10),
a rolling piston (12) which has a second connection region for the other bellows end (2b),
wherein the rolling piston (12) has a rolling surface (14) for the roll fold (3) of the air spring bellows (2),
a connection element (16) which is connected to the rolling piston (12), and
a corrugated bellows (20) which is connected at one side to the external sleeve (10) and at the other side to the connection element (16) or to the rolling piston (12), wherein the corrugated bellows (20) is assembled from an inner and an outer corrugated bellows part (20a, 20b), wherein the outer corrugated bellows part (20b) at least partially encloses the inner corrugated bellows part (20a), **characterized in that**, during the compression of the air spring arrangement (1), the outer corrugated bellows part (20b) is compressed and the inner corrugated bellows part (20a) is extended, and **in that**, during the extension of the air spring arrangement (1), the outer corrugated bellows part (20b) is extended and the inner corrugated bellows part (20a) is compressed.

2. Air spring arrangement (1) according to Claim 1, **characterized in that**, during relatively extreme compression or extension movements of the air spring arrangement (1), at least some of the corrugation portions (24a, 24b) of the inner and/or of the outer corrugated bellows part (20a, 20b) are loaded to a blocked state.

3. Air spring arrangement (1) according to one of the preceding claims, **characterized in that** the corrugation portions (24a, 24b) of the inner and of the outer corrugated bellows part (20a, 20b) are of approximately identical geometric design.

4. Air spring arrangement (1) according to one of the preceding claims, **characterized in that** the corrugation portions (24a) of the inner corrugated bellows part (20a) are of a different geometric design than the corrugation portions (24b) of the outer corrugated bellows part (20b).

5. Air spring arrangement (1) according to one of the preceding claims, **characterized in that** the number of corrugation portions (24a, 24b) of the inner or of the outer corrugated bellows part (20a, 20b) is greater than the number of corrugation portions (24b, 24a) of the outer or of the inner corrugated bellows part (20b, 20a) respectively.

6. Air spring arrangement (1) according to one of the preceding claims, **characterized in that** at least the first end of the outer corrugated bellows part (20b) can be fastened by means of a first fastening element to the cover (6) and/or to the external sleeve (10) of the air spring arrangement (1).

7. Air spring arrangement (1) according to one of the preceding claims, **characterized in that** at least the first end of the inner corrugated bellows part (20a) can be fastened by means of a second fastening element to the rolling piston (12) and/or to the connection element (16) of the air spring arrangement (1).

8. Air spring arrangement (1) according to one of the preceding claims, **characterized in that** the second end of the inner corrugated bellows part (20a) can be connected to the second end of the outer corrugated bellows part (20b).

9. Air spring arrangement (1) according to one of the preceding claims, **characterized in that** the inner corrugated bellows part (20a) and the outer corrugated bellows part (20b) are formed in one piece in the form of one corrugated bellows (20).

10. Air spring arrangement (1) according to Claim 8, **characterized in that** the inner and the outer corrugated bellows parts (20a, 20b) can be connected by a mechanical connecting means (26).

11. Air spring arrangement (1) according to Claim 8, **characterized in that** the inner and the outer corrugated bellows parts (20a, 20b) can be connected to one another via a joining seam (28) by means of welding, adhesive bonding or vulcanization.

## Revendications

1. Agencement de ressort pneumatique (1) pour un véhicule, qui contient les constituants suivantes :
un soufflet de ressort pneumatique (2) en matériau élastomère avec deux extrémités de soufflet (2a, 2b), qui entoure une chambre à air (4) de volume élastique en formant un pli roulant (3),
un couvercle (6) avec une première région de raccordement pour une extrémité du soufflet (2a),
une douille extérieure (10),
un piston de déroulage (12) avec une deuxième région de raccordement pour l'autre extrémité de soufflet (2b), le piston de déroulage (12) présentant une surface de déroulage (14) pour le pli roulant (3) du soufflet de ressort pneumatique (2),
un élément de raccordement (16), qui est connecté au piston de déroulage (12), et un soufflet (20) qui est connecté d'une part à la douille extérieure (10) et d'autre part à l'élément de raccordement (16) ou au piston de déroulage (12),
le soufflet (20) se composant d'un soufflet partiel intérieur et d'un soufflet partiel extérieur (20a, 20b), le soufflet partiel extérieur (20b) entourant au moins en partie le soufflet partiel intérieur (20a), **caractérisé en ce que** dans le cas d'une compression de ressort de l'agencement de ressort pneumatique (1), le soufflet partiel extérieur (20b) est comprimé et le soufflet partiel intérieur (20a) est déployé, et **en ce que** dans le cas d'un débattement de ressort de l'agencement de ressort pneumatique (1), le soufflet partiel extérieur (20b) est déployé et le soufflet partiel intérieur (20a) est comprimé.

2. Agencement de ressort pneumatique (1) selon la revendication 1, **caractérisé en ce que** dans le cas de déplacements de compression ou de débattement relativement importants de l'agencement de ressort pneumatique (1), au moins une partie des portions de pli (24a, 24b) du soufflet partiel intérieur et/ou du soufflet partiel extérieur (20a, 20b) sont sollicitées en butée.

3. Agencement de ressort pneumatique (1) selon l'une quelconque des revendications précédentes, **caractérisé en ce que** les portions de pli (24a, 24b) du soufflet partiel intérieur et du soufflet partiel extérieur (20a, 20b) présentent une forme géométrique pratiquement identique.

4. Agencement de ressort pneumatique (1) selon l'une quelconque des revendications précédentes, **caractérisé en ce que** les portions de pli (24a) du soufflet partiel intérieur (20a) présentent, par rapport aux portions de pli (24b) du soufflet partiel extérieur (20b), une autre forme géométrique.

5. Agencement de ressort pneumatique (1) selon l'une quelconque des revendications précédentes, **caractérisé en ce que** le nombre des portions de pli (24a, 24b) du soufflet partiel intérieur ou du soufflet partiel extérieur (20a, 20b) est supérieur au nombre des portions de pli (24b, 24a) du soufflet partiel extérieur ou du soufflet partiel intérieur (20b, 20a).

6. Agencement de ressort pneumatique (1) selon l'une quelconque des revendications précédentes, **caractérisé en ce qu'**au moins la première extrémité du soufflet partiel extérieur (20b) peut être fixée au moyen d'un premier élément de fixation au couvercle (6) et/ou à la douille extérieure (10) de l'agencement de ressort pneumatique (1).

7. Agencement de ressort pneumatique (1) selon l'une quelconque des revendications précédentes, **caractérisé en ce qu'**au moins la première extrémité du soufflet partiel intérieur (20a) peut être fixée au moyen d'un deuxième élément de fixation au piston de déroulage (12) et/ou à l'élément de raccordement (16) de l'agencement de ressort pneumatique (1).

8. Agencement de ressort pneumatique (1) selon l'une quelconque des revendications précédentes, **caractérisé en ce que** la deuxième extrémité du soufflet partiel intérieur (20a) peut être connectée à la deuxième extrémité du soufflet partiel extérieur (20b).

9. Agencement de ressort pneumatique (1) selon l'une quelconque des revendications précédentes, **caractérisé en ce que** le soufflet partiel intérieur (20a) et le soufflet partiel extérieur (20b) sont réalisés d'une seule pièce sous forme de soufflet (20).

10. Agencement de ressort pneumatique (1) selon la revendication 8, **caractérisé en ce que** le soufflet partiel intérieur et le soufflet partiel extérieur (20a, 20b) peuvent être connectés au moyen d'un moyen de connexion mécanique (26).

11. Agencement de ressort pneumatique (1) selon la revendication 8, **caractérisé en ce que** le soufflet partiel intérieur et le soufflet partiel extérieur (20a, 20b) peuvent être connectés l'un à l'autre au moyen d'un joint d'assemblage (28), par soudage, collage ou vulcanisation.
